# EUROPÄISCHE PATENTSCHRIFT

(11) **EP 0 782 899 B1**
(45) Veröffentlichungstag und Bekanntmachung des Hinweises auf die Patenterteilung: **10.01.2001**
(21) Anmeldenummer: 96117203.8
(22) Anmeldetag: 26.10.1996
(51) Int. Cl.: B23Q 3/157

(54) **Werkzeugmaschine**
MACHINE-TOOL
MACHINE-OUTIL

(30) Priorität: 03.01.1996 DE 19600054
(43) Veröffentlichungstag der Anmeldung: 09.07.1997
(73) Patentinhaber: Chiron-Werke GmbH & Co. KG, 78532 Tuttlingen (DE)
(72) Erfinder: Rütschle, Eugen, 78570 Mühlheim (DE)
(74) Vertreter: Otten, Hajo, Dr.-Ing.

(56) Entgegenhaltungen:
- EP-A- 0 712 685
- WO-A-92/22400
- GB-A- 2 255 734

## Beschreibung

Die vorliegende Erfindung betrifft eine Werkzeugmaschine mit einer Spindel, einem Werkzeugwechsler zum Überführen von Werkzeughaltern zwischen einer Magazinposition und einer Spindelposition an der Spindel sowie mit einer Hubvorrichtung zum Überführen eines Werkzeughalters zwischen der Spindelposition und einer Arbeitsposition in einer Werkzeugaufnahme der Spindel, wobei für den Werkzeugwechsler und die Hubvorrichtung eine gemeinsame Antriebsvorrichtung vorgesehen ist,

Eine derartige Werkzeugmaschine ist aus der WO-A-92 22 400 bekannt.

Bei der bekannten Werkzeugmaschine ist ein Doppelgreifer vorgesehen, der horizontal verschiebbar, vertikal verstellbar und drehbar gelagert ist, um Werkzeuge zwischen einem festen Werkzeugmagazin und einer in Wechselposition befindlichen Spindel zu überführen. Die drei Bewegungen des Doppelgreifers werden über eine gemeinsame Antriebsvorrichtung bewerkstelligt, die hierzu verschiedene Steuerkurven mit zugeordneten Nocken umfaßt.

Aus der nicht vorveröffentlichten EP 0 712 685 A1, die bezüglich der Neuheit zu berücksichtigender Stand der Technik gemäß Artikel 54(3) Europäisches Patentübereinkommen ist, ist eine Werkzeugmaschine mit einer Spindel und einem Werkzeugwechsler bekannt, der einen horizontal schwenkbaren Doppelgreifer umfaßt, der an einer in Längsrichtung verschiebbaren sowie drehbaren Welle befestigt ist. Diese beiden Bewegungen der Welle werden über zwei Nockenscheiben bewirkt, die auf einer gemeinsamen Antriebswelle sitzen. Die Werkzeuge sind in einem Werkzeugmagazin gehalten, das genauso wie der Werkzeugwechsler bezüglich der vertikalen Richtung festgelegt ist, so daß die Spindel zum Werkzeugwechsel eine Wechselposition anfahren muß.

Bei einer weiteren, aus der DE 44 21 385 A1 bekannten Werkzeugmaschine ist die Spindel in einem Spindelrohr drehbar gelagert. Der Werkzeugwechsler umfaßt zwei Greifarme zum Transportieren der Werkzeughalter zwischen der Magazinposition und der Spindelposition unterhalb der Werkzeugaufnahme. An dem Spindelrohr ist eine Haltevorrichtung im Sinne einer Hubbewegung längsverschieblich gelagert, die den Werkzeugwechsler trägt und zum Überführen des jeweiligen Werkzeughalters von der Spindelposition in seine Arbeitsposition in der Werkzeugaufnahme dient. Die Haltevorrichtung ist an dem Spindelrohr um dessen Längsachse derart drehbar gelagert, daß die Greifarme eine gemeinsame Übergabeposition zu dem Werkzeugmagazin aufweisen.

Für den Antrieb der zwei Greifarme ist jeweils eine hydraulische Kolben-Zylindereinheit vorgesehen. Weiterhin ist für die Hub- und Drehbewegungen der Haltevorrichtung eine weitere Kolben-Zylindereinheit vorgesehen. Ein Drehmechanismus sorgt dafür, daß in bestimmten Zuständen die Haltevorrichtung während der Hubbewegung zwangsweise verdreht wird.

Mit dieser Werkzeugmaschine sind Werkzeugwechsel zwar rasch durchzuführen, allerdings ist der bauliche Aufwand relativ groß.

Ausgehend hiervon ist es Aufgabe der vorliegenden Erfindung, eine Werkzeugmaschine zu schaffen, die mit geringem baulichem Aufwand rasche Werkzeugwechselzeiten bewerkstelligt.

Erfindungsgemäß wird diese Aufgabe bei der eingangs genannten Werkzeugmaschine dadurch gelöst, daß die gemeinsame Antriebsvorrichtung und der Werkzeugwechsler an einer parallel zur Hubrichtung bewegbaren Konsole angeordnet sind.

Durch diese Maßnahme können die Hubbewegungen der Hubvorrichtung durch Hubbewegungen der Konsole erzielt werden. Indem nicht nur der Werkzeugwechsler sondern auch die gemeinsame Antriebsvorrichtung auf der Konsole angeordnet ist, sind die Kraftübertragungswege, insbesondere zum Werkzeugwechsler, minimal kurz.

Die der Erfindung zugrundeliegende Aufgabe wird auf diese Weise also vollkommen gelöst.

Vorzugsweise weist die gemeinsame Antriebsvorrichtung einen Motor mit zwei Abtriebswellen auf, die mit einem Wechslerantrieb bzw. einem Hubantrieb der gemeinsamen Antriebsvorrichtung antriebsmäßig gekoppelt sind.

Durch diese Maßnahme erfolgt eine Abkehr von dem bislang erfolgten Ansatz, die Werkzeughalterbewegungen durch Kolben-Zylindereinheiten zu vollziehen. Aufgrund der formschlüssigen Kraftübertragung von Motoren kann diese Antriebstechnik konstruktiv besonders einfach die Anforderung erfüllen, die Wechslerbewegungen und die Hubbewegungen aufeinander abzustimmen. Falls der Motor als Getriebemotor ausgebildet ist, können dem Wechslerantrieb einerseits und dem Hubantrieb andererseits unterschiedliche Drehzahlen erteilt werden, was die Abstimmung der beiden Bewegungsarten weiter vereinfacht.

Dabei ist es von Vorzug, wenn der Wechslerantrieb und/oder der Hubantrieb als Wechslergetriebe bzw. als Hubgetriebe ausgebildet sind.

Durch diese Maßnahme kann auf besonders einfache Weise dem Umstand Rechnung getragen werden, daß die zur Einleitung des Wechselvorganges einerseits und des Hubvorganges andererseits notwendigen Kräfte häufig an völlig unterschiedlichen Orten ansetzen müssen. Das bzw. die Getriebe sorgen dann für die Kraftübertragung von dem Motor der gemeinsamen Antriebsvorrichtung zu den jeweiligen Orten, an welchen die Motorkraft gefragt ist.

Gemäß einer bevorzugten Ausführungsform sind das Wechslergetriebe und das Hubgetriebe derart aufeinander abgestimmt, daß Wechslerbewegungen und Hubbewegungen unmittelbar aufeinander folgen.

Durch diese Maßnahmen lassen sich die Werkzeugwechselzeiten insgesamt erheblich reduzieren, da zwischen den Wechslerbewegungen und den Hubbewegungen keine Standzeiten des Antriebs auftreten. Durch die systemimmanente Formschlüssigkeit der aus Motor und Getrieben bestehenden Antriebsvorrichtung ist diese Forderung zudem besonders leicht zu erfüllen.

Vorzugsweise ist der Hubantrieb der gemeinsamen Antriebsvorrichtung an einem Spindelstock in Hubrichtung verschiebbar gelagert und stützt sich für Hubbewegungen an dem Spindelstock ab. Anstelle des Spindelstockes kann die Lagerung bzw. Abstützung auch an einem starr mit diesem verbundenen Maschinenteil erfolgen.

Dies hat zum einen den Vorteil, daß auch der Antriebsstrang für den Hubantrieb kurz ist. Zum anderen ist vorteilhafterweise gewährleistet, daß die Konsole und die darauf angeordneten Antriebselemente alle Bewegungen des Spindelstockes "mitmachen". Dies ist insbesondere dann von Vorzug, wenn es sich bei der Werkzeugmaschine um einen solchen Typ handelt, bei dem der Spindelstock in X-Y-Z-Richtung relativ zu dem zu bearbeitenden Werkstück bewegt wird.

Dabei ist es von Vorzug, wenn die Konsole federentlastet an dem Spindelstock abgestützt ist.

Durch diese Maßnahme können die auf das Hubgetriebe wirkenden Kräfte wesentlich reduziert werden, welches an sich mit dem gesamten Gewicht der Konsole und der darauf angeordneten Antriebselemente beaufschlagt ist.

Gemäß einer bevorzugten Ausführungsform weist das Hubgetriebe der gemeinsamen Antriebsvorrichtung eine mit der zugeordneten Abtriebswelle des Motors drehfest verbundene Kurbel mit einem Kurbelzapfen, eine Zahnschubstange mit zwei Nuten, in die der Kurbelzapfen wahlweise eingreift, sowie eine mit der Zahnschubstange kämmende Zahnradkurbel mit einem Kurbelzapfen auf, der ortsfest an dem Spindelstock abgestützt ist.

Durch ein derartiges Hubgetriebe lassen sich auf konstruktiv besonders einfache Weise Hubbewegungen durch einen auf der Konsole angeordneten Motor erzielen. Die von der Motorabtriebswelle ausgehende Rotationsbewegung wird zunächst in eine Longitudinalbewegung der Zahnschubstange umgesetzt, die wiederum in einer Rotationsbewegung der Zahnradkurbel umgesetzt wird, deren Kurbelzapfen sich am Spindelstock abstützt. Auf diese Weise ist es besonders einfach möglich, die von dem Motor ausgehende Rotationsbewegung in einer reine Hubbewegung ohne seitlichen Versatz umzusetzen. Es versteht sich, daß die Dimensionierungen von Kurbel, Nutenanordnung und -abstand in Abstimmung mit den Dimensionierungen des Wechslerantriebes gewählt werden. Durch das Vorsehen von zwei Nuten ist es möglich, die Zahnschubstange absatzweise zu bewegen, derart, daß bei Einleitung einer Rotation der Motorabtriebswelle der Kurbelzapfen zunächst in der einen Nut angreift und damit für eine Aushubbewegung der Werkzeughalter sorgt, anschließend ein Leerhub beim Wechsel des Kurbelzapfens von der ersten Nut zur zweiten Nut erfolgt, in welchem Zeitraum die Wechslerbewegung vollzogen werden kann, und bei Eingreifen des Kurbelzapfens in die zweite Nut das Hubgetriebe für einen Spindeleinhub sorgt.

Gemäß einer weiteren bevorzugten Ausführungsform weist das Wechslergetriebe der gemeinsamen Antriebsvorrichtung eine mit der zugeordneten Abtriebswelle des Motors drehfest verbundene Kurbel mit einem Kurbelzapfen auf, der in eine Nut einer Schubstange eingreift, die in einen Riemen- oder Kettenantrieb für den Werkzeugwechsler eingeschaltet ist.

Mit einem derartigen Wechslergetriebe kann die Antriebskraft des Motors auf konstruktiv besonders einfache Weise zu dem Werkzeugwechsler übertragen werden. Die von dem Motor ausgehende Rotationsbewegung wird in eine Translationsbewegung umgesetzt, die wiederum zu einem Verdrehen des Riemens oder der Kette führt. Der Riemen oder die Kette können dann bspw. um ein Antriebsrad des Werkzeugwechslers geführt werden, so daß sich der Werkzeugwechsler bei Eingreifen des Kurbelzapfens der Kurbel in die Nut der Schubstange dreht.

Dabei ist es bevorzugt, wenn der Riemen- oder Kettenantrieb einen Zahnriemen aufweist.

Diese Maßnahme hat den Vorteil, daß ohne großen baulichen Aufwand die Antriebskraft des Motors auch zu - relativ gesehen - entfernteren Positionen, sogar "um die Ecke" geleitet werden kann. Dies ist insbesondere vorteilhaft, da somit die die gemeinsame Antriebsvorrichtung tragende Konsole an der Vorderseite des Spindelstockes angeordnet und die Antriebskraft des Motors zu einem seitlich an dem Spindelstock angeordneten Werkzeugwechsler übertragen werden kann.

Gemäß einem weiteren bevorzugten Ausführungsbeispiel weist der Riemen- oder Kettenantrieb eine Justiervorrichtung auf.

Durch eine solche Justiervorrichtung ist es besonders einfach, den Nullpunkt des Werkzeugwechslers einzustellen.

Es ist weiterhin von Vorzug, wenn die Schubstange mit Rastnuten versehen ist, deren Positionen an der Schubstange der Magazinposition bzw. der Spindelposition des Werkzeugwechslers entsprechen.

Durch solche Rastnuten ist es konstruktiv besonders einfach möglich, dafür zu sorgen, daß die von dem Werkzeugwechsler gehaltenen Werkzeughalter in den Endpositionen jeweils genau positioniert sind. Dies ist insbesondere deswegen wichtig, weil anschließend an den Wechslervorgang die Hubbewegung eingeleitet wird, durch welche der Werkzeughalter präzise in die Werkzeugaufnahme der Spindel eingeführt wird.

Gemäß einem weiteren bevorzugten Ausführungsbeispiel sind die Nuten der Schubstange bzw. der Zahnschubstange offene Nuten mit einer dem Radius der jeweiligen Kurbeln entsprechenden Tiefe.

Durch diese Maßnahme ist es besonders einfach, die Wechslerund Hubbewegungen aufeinander abzustimmen. Dies erfolgt im wesentlichen durch Auswahl geeigneter Radien der Kurbeln, wodurch vermieden wird, den Motor selbst mit einem komplizierten Getriebe auszustatten.

Wie bereits erwähnt, hat die Zahnschubstange vorzugsweise zwei Nuten und die Schubstange vorzugsweise eine Nut. Der Eingriff der jeweiligen Kurbeln in diese Nuten erfolgt dann so, daß die Wechsler- und die Hubbewegungen unmittelbar aufeinander folgen.

Von besonderem Vorzug ist es, wenn die Werkzeugmaschine zwei Spindeln und zwei diesen Spindeln zugeordnete Werkzeugwechsler aufweist, die von demselben Wechslerantrieb angetrieben werden.

Mit einer derartigen Werkzeugmaschine können immer zwei Werkstücke gleichzeitig bearbeitet werden. Insbesondere, wenn der Wechslerantrieb, wie oben erwähnt, einen Zahnriemen aufweist, ist es leicht möglich, beide Werkzeugwechsler parallel anzutreiben.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine erfindungsgemäße Werkzeugmaschine in Vorderansicht, wobei schematisch eine gemeinsame Antriebsvorrichtung für zwei Werkzeugwechsler und eine Hubvorrichtung gezeigt sind;
- Fig. 2: eine perspektivische Ansicht einer Ausführungsform einer gemeinsamen Antriebsvorrichtung für die Werkzeugwechsler und die Hubvorrichtung der Werkzeugmaschine aus Fig. 1;
- Fig. 3: eine schematische Schnittansicht durch die Antriebsvorrichtung aus Fig. 2;
- Fig. 4: eine schematische Darstellung in Phasen der Antriebsabläufe für den Werkzeugwechsel- und den Hubvorgang; und
- Fig. 5: eine schematische Seitenansicht eines mit der gemeinsamen Antriebsvorrichtung aus Fig. 2 angetriebenen Werkzeugwechslers.

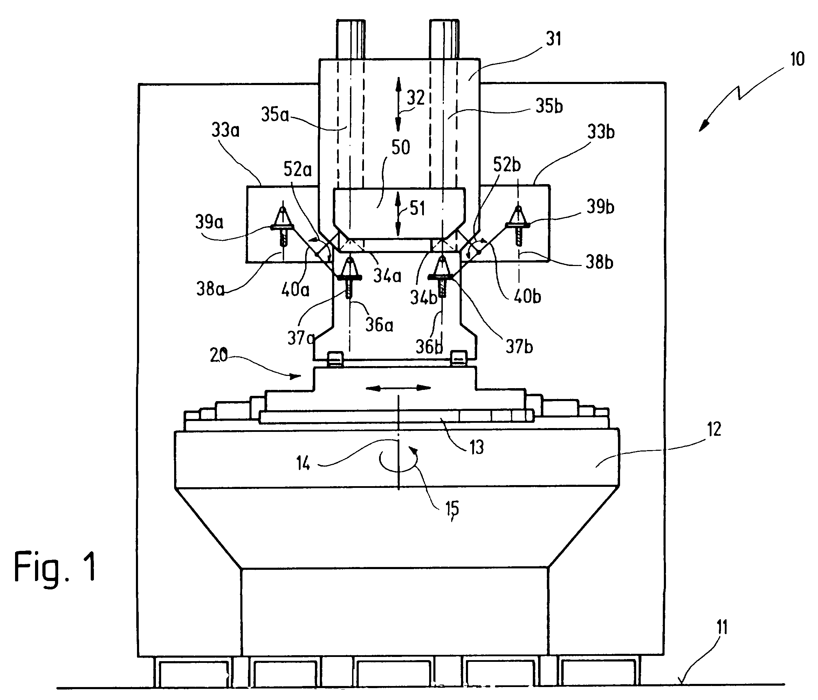

In Fig. 1 ist allgemein mit 10 eine Werkzeugmaschine bezeichnet, die auf einem Fundament 11 steht. Die Werkzeugmaschine 10 weist einen Werkzeugtisch 12 auf, auf welchem ein um eine Achse 14 drehbarer Werkstückwechsler 13 angeordnet ist, wie durch einen Pfeil 15 angedeutet.

Die Werkzeugmaschine 10 weist weiterhin einen horizontalen, in X- und Y-Richtung bewegbaren X-Y-Ständer 20 auf, auf dem ein in Z-Richtung 32 verfahrbarer Spindelstock 31 angeordnet ist. Seitlich an dem Spindelstock 31 sind zwei Werkzeugmagazine 33a, 33b angeordnet.

In dem Spindelstock 31 sind zwei Spindeln 35a, 35b drehbar gelagert, an deren vertikal unteren Enden Werkzeugaufnahmen 34a, 34b zur Aufnahme von Werkzeughaltern 37a, 37b, 39a, 39b vorgesehen sind.

Seitlich an dem Spindelstock 31 sind zwei Werkzeugwechsler 40a, 40b vorgesehen, die Werkzeughalter 39a, 39b, die sich vor den entsprechenden Werkzeugmagazinen 33a, 33b in Magazinpositionen 38a, 38b befinden, in Spindelpositionen 36a, 36b unterhalb der Spindeln 35a, 35b überführen können. Bei einem solchen Wechselvorgang werden gleichzeitig Werkzeughalter 37a, 37b, die sich in den Spindelpositionen 36a, 36b befinden, in die Magazinpositionen 38a, 38b überführt.

An dem Spindelstock 31 ist weiterhin eine gemeinsame Antriebsvorrichtung 50 vertikal verfahrbar angeordnet, wie es durch einen Pfeil 51 angedeutet ist. Die Antriebsvorrichtung treibt die Werkzeugwechsler 40a, 40b an, wie es schematisch durch Pfeile 52a, 52b angedeutet ist. Die Werkzeugwechsler 40a, 40b sind an der gemeinsamen Antriebsvorrichtung 50 gelagert, so daß Werkzeughalter nach erfolgtem Wechselvorgang von der Magazinposition 38a, 38b in die Spindelposition 37a, 37b durch eine Vertikalbewegung der gemeinsamen Arbeitsvorrichtung in die Werkzeugaufnahmen 34a, 34b der Spindeln 35a, 35b, also in ihrer Arbeitsposition eingehoben werden können.

Bei diesem Hubvorgang, mittels dessen die sich in der Spindelposition 36a, 36b befindlichen Werkzeughalter 37a, 37b in die Werkzeugaufnahmen 34a, 34b bewegt werden, werden natürlich auch die sich in der Magazinposition 38a, 38b befindlichen Werkzeughalter 39a, 39b in eine Position gehoben, in welcher sie von dem jeweiligen Werkzeugwechsler 40a, 40b abgenommen und durch einen Werkzeughalter aus dem Werkzeugmagazin 33a, 33b ersetzt werden können, der mit einem Werkzeug für den nächsten Bearbeitungsschritt versehen ist.

Es versteht sich, daß vor einem weiteren Wechselvorgang die gemeinsame Antriebsvorrichtung 50 zunächst wieder abgesenkt werden muß, um die sich in den Werkzeugaufnahmen 34a, 34b befindlichen Werkzeughalter zunächst wieder in die Spindelposition 36a, 36b zu überführen.

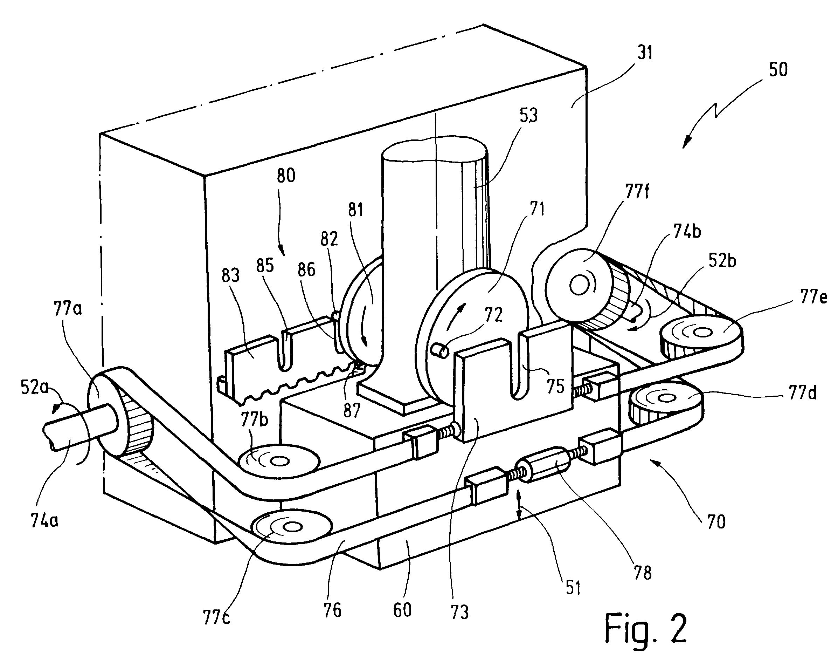

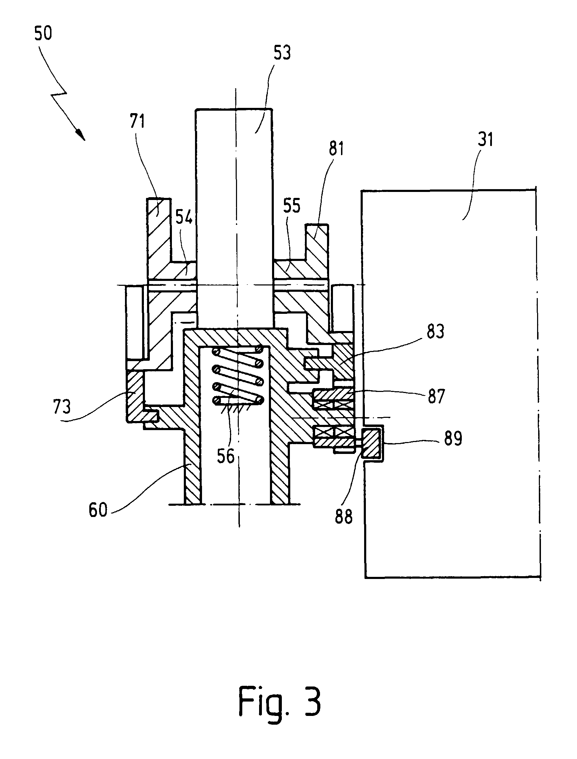

In Fig. 2 und 3 ist eine Ausführungsform einer solchen gemeinsamen Antriebsvorrichtung 50 gezeigt.

Die gemeinsame Antriebsvorrichtung 50 weist einen Motor 53 auf, der auf einer Konsole 60 festgelegt ist, die, wie durch den Pfeil 51 angedeutet, vertikal an dem Spindelstock 31 verfahrbar gelagert ist. Der Motor 53 hat zwei - in Fig. 2 nicht dargestellte - Abtriebswellen 54, 55, von denen eine 55 zum Spindelstock 31 hin, die andere 54 vom Spindelstock 31 weg abgeht. An der Konsole 60 sind auch die Werkzeugwechsler 40a, 40b festgelegt (nicht dargestellt).

Die gemeinsame Antriebsvorrichtung 50 weist weiterhin einen Wechslerantrieb 70 zum Antrieben der beiden Werkzeugwechsler 40a, 40b sowie einen Hubantrieb 80 zum vertikalen Verfahren der Konsole 60 am Spindelstock 31 auf, die mit den Abtriebswellen des Motors 53 antriebsmäßig gekoppelt sind. Der Wechslerantrieb 70 sowie der Hubantrieb 80 sind durch ein Wechslergetriebe 70 bzw. ein Hubgetriebe 80 gebildet.

Das Wechslergetriebe 70 weist eine Kurbel 71 mit einem Kurbelzapfen 72 auf, die mit der vom Spindelstock 31 weg weisenden Abtriebswelle 54 des Motors 53 drehfest verbunden ist. Das Wechslergetriebe 70 weist weiterhin einen Zahnriemenantrieb mit einem Zahnriemen 76, einer Reihe von Leitrollen 77a - 77f, einer in den Zahnriemen geschalteten Justiervorrichtung 78 in Form eines Spannschlosses sowie einer in den Zahnriemen 76 geschalteten Schubstange 73 auf. Die Schubstange 73 hat eine nach oben offene Nut 75 und ist benachbart zur Kurbel 71 an der Konsole 60 geführt, so daß deren Kurbelzapfen 72 in die Nut 75 eingreifen kann. Die Tiefe der Nut 75 entspricht etwa dem Kurbelradius.

Die Leitrollen 77a - 77f umfassen vier als Umlenkrollen ausgebildete Leitrollen 77b - 77e, die dazu dienen, den umlaufenden Zahnriemen 76 von einem vorderen Abschnitt des Spindelstockes 31 zu dessen beiden Seiten umzulenken. Die so seitlich gebildeten Endschlaufen des Zahnriemens 76 laufen um zwei weitere Leitrollen 77a bzw. 77f, die gegenüber der Vertikalen etwas geneigt und drehfest mit jeweiligen Antriebswellen 74a, 74b für die beidseits des Spindelstockes 31 an der Konsole 60 befestigten Werkzeugwechsler 40a bzw. 40b verbunden sind. Obwohl dies in der Zeichnung aus Gründen der Übersichtlichkeit nicht dargestellt ist, versteht sich, daß die Leitrollen 77a - 77f sämtlich an der Konsole 60 gelagert sind und sich daher bei Hubbewegungen der Konsole 60 mitbewegen.

Wenn der Kurbelzapfen 72 der Kurbel 71 in die Nut 75 der Schubstange 73 greift und diese hierdurch transversal bewegt, wird durch die entsprechende Bewegung des Zahnriemens 76 den Antriebswellen 74a, 74b eine Rotation zum Antrieb der Werkzeugwechsler 40a, 40b erteilt. Mit der Justiervorrichtung 78 läßt sich der Nullpunkt der Werkzeugwechsler 40a, 40b einstellen.

Das Hubgetriebe 80 umfaßt eine weitere Kurbel 81, die mit der dem Spindelstock 31 zugewandten Abtriebswelle 55 des Motors 53 drehfest verbunden ist und einen Kurbelzapfen 82 aufweist. Benachbart zu der Kurbel 81 ist eine Zahnschubstange 83 horizontal verschiebbar an der Konsole 60 gelagert. Die Zahnschubstange 83 weist zwei Nuten 85, 86 auf, in welche der Kurbelzapfen 82 der Kurbel 81 greifen kann. Der Abstand der Nuten 85, 86 entspricht dem Kurbeldurchmesser der Kurbel 81. Die Zahnschubstange 83 liegt auf einer Zahnradkurbel 87 auf und kämmt mit dieser. Die Zahnradkurbel 87 weist einen -in Fig. 2 nicht dargestellten - Zapfen 88 auf, der in eine Nut 89 in dem Spindelstock 31 greift und durch diese vertikal fixiert ist.

Bei Eingreifen des Kurbelzapfens 82 in die Nuten 85 oder 86 wird die Zahnschubstange 83 seitlich versetzt. Durch den kämmenden Eingriff mit der Zahnradkurbel 87 dreht sich diese um ihren vertikal gehaltenen Zapfen 88, so daß die Konsole 60 mit den darin festgelegten Teilen vertikal auf und ab bewegt wird.

In Fig. 3 ist schematisch eine Feder 56 angedeutet, die das Eigengewicht der Konsole 60 und der daran festgelegten Teile soweit aufnimmt, daß das Hubgetriebe 80 nicht allzu große Kräfte aufnehmen muß.

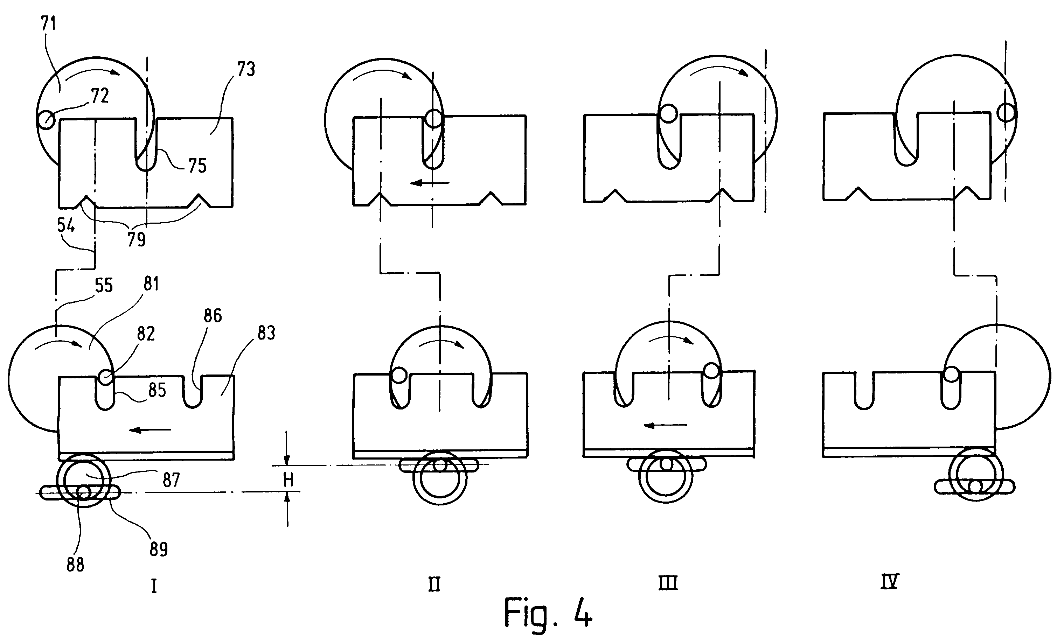

In Fig. 4 ist in Phasen I - IV der Antriebsablauf der gemeinsamen Antriebsvorrichtung 50 gezeigt.

Eine Ausgangsstellung ist in Phase I gezeigt. In einem ersten Arbeitsschritt von Phase I nach Phase II vollzieht die Kurbel 71 über einen Winkelbereich von 180° einen Leerhub, es findet also kein Eingriff in die Nut 75 der Schubstange 73 und somit keine Rotation der Werkzeugwechsler 40a, 40b statt. In demselben Arbeitsschritt vollzieht die Kurbel 81 eine Drehung um 180°, wobei der Kurbelzapfen 82 in die Nut 85 eingreift und somit die Zahnschubstange 83 in Fig. 4 nach links versetzt. Hierdurch dreht die Zahnradkurbel 87 um ihren Zapfen 88 in der Nut 89 des Spindelstockes 31 um 180°, was zu einem Hub H entsprechend dem Kurbeldurchmesser der Zahnradkurbel 87 führt. In diesem ersten Arbeitsgang senkt sich also die Konsole 60 um H, wodurch die sich in Phase I in den Werkzeugaufnahmen 34a, 34b der Spindeln 35a, 35b befindlichen Werkzeughalter aus diesen ausgehoben werden.

Im nächsten Arbeitsschritt von Phase II nach Phase III vollzieht die Kurbel 81 einen Leerhub um 180°, wobei der Kurbelzapfen 82 von der Nut 85 zur Nut 86 versetzt wird. Eine Hubbewegung findet demgemäß nicht statt.

Zur selben Zeit findet ein Eingriff des Kurbelzapfens 72 in die Nut 75 der Schubstange 73 statt, wodurch diese in der Fig. 4 nach links versetzt wird und hierdurch die beiden Werkzeugwechsler 40a, 40b antreibt. In der Phase III befinden sich somit die zuvor (in Phasen I, II) in der Magazinposition 38a, 38b befindlichen Werkzeughalter 39a, 39b in der Spindelposition 36a, 36b und die zuvor zur Werkstückbearbeitung eingesetzten Werkzeughalter 37a, 37b sind von der Spindelposition 36a, 36b in die Magazinposition 38a, 38b überführt (vgl. Fig. 1).

Im dritten Arbeitsschritt von Phase III nach Phase IV vollzieht die Kurbel 71 wiederum einen Leerhub, so daß die Werkzeugwechsler 40a, 40b nicht angetrieben werden. Zur gleichen Zeit greift der Kurbelzapfen 82 der Kurbel 81 in die Nut 86 der Zahnschubstange 83 ein, so daß die Konsole 60 um den Wert H wieder angehoben wird, mit dem Ergebnis, daß die Werkzeughalter von der Spindelposition 36a, 36b in die Werkzeugaufnahmen 34a, 34b der Spindeln 35a, 35b bewegt werden. Somit ist ein vollständiger Wechselvorgang mit zwei Hubbewegungen und einer Werkzeugwechslerrotation vollzogen. Beim nächsten Werkzeugwechselvorgang, bei dem die Kurbeln 71, 81 in entgegengesetzte Richtung gedreht werden, vollziehen sich die gleichen Schritte in umgekehrter Reihenfolge, also von Phase IV nach Phase I, usw.

In Fig. 4 sind an der Schubstange 73 zwei Rastnuten 79 angedeutet, deren Positionen an der Schubstange 73 der Magazinposition bzw. der Spindelposition entsprechen. Somit können in diesen Positionen entsprechend vorgesehene Rastmittel in die Nuten 79 einrasten, um die Werkzeugwechsler 40a, 40b in ihren Endpositionen jeweils genau zu fixieren.

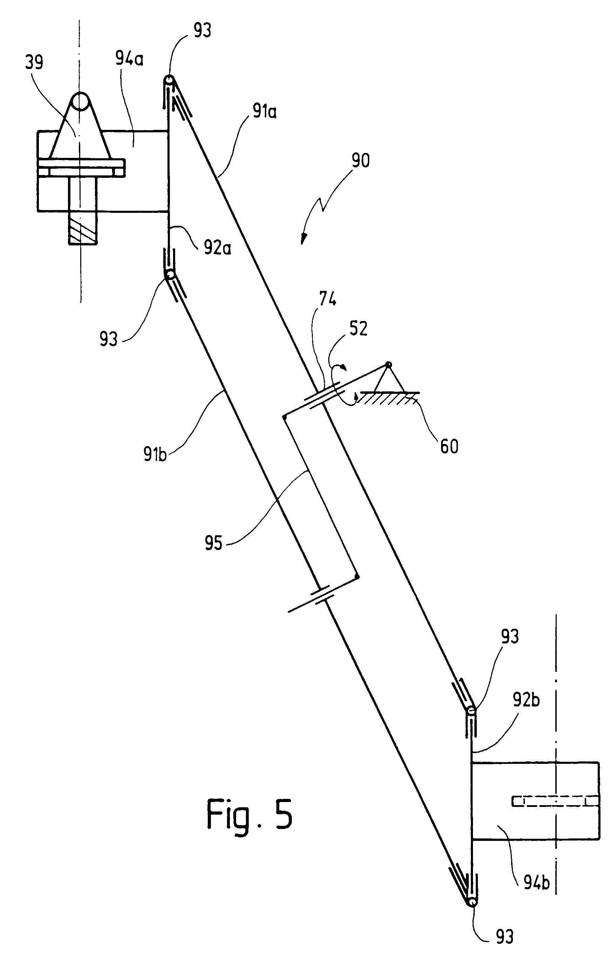

Fig. 5 zeigt schließlich schematisch einen an der Konsole 60 festgelegten Werkzeugwechsler, der als Rotationsgetriebe 90 ausgebildet ist. Die vorliegende Erfindung ist besonders bevorzugt mit einem derartigen, rotierenden Werkzeugwechsler 90 einsetzbar. Einzelheiten dieses Werkzeugwechslers 90 sind in einer parallelen Anmeldung desselben Anmelders (Anwaltsakte 1401P165) beschrieben, auf die hiermit vollinhaltlich Bezug genommen wird.

Das Rotationsgetriebe 90 besteht im wesentlichen aus zwei Längsstäben 91a, 91b und zwei Querstäben 92a, 92b, die über Kreuzgelenke 93 zu einem Gelenkparallelogramm verbunden sind. Die Längsstäbe 91a, 91b sind jeweils mittig drehbar an einer ortsfesten Koppeleinrichtung 95 gelagert. An den Querstäben 92a, 92b sind Greifer 94a bzw. 94b festgelegt, die dazu ausgelegt sind, die Werkzeughalter 37, 39 in den Übergabepositionen zu ergreifen und während eines Wechselvorganges sicher zu halten.

Ein Wechselvorgang wird durch eine Rotation der geneigten Antriebswelle 74 eingeleitet, wodurch sich die Längsstäbe 91a, 91b um von der Koppeleinrichtung 95 gebildete Achsen drehen. Durch die Kreuzgelenke 93 bleiben die Querstäbe 92a, 92b hierbei im wesentlichen vertikal ausgerichtet.

Eine 180°-Drehung der Antriebswelle 74 und damit der Längsstäbe 91a, 91b entspricht dabei der durch die Schubstange 73 von Phase II nach Phase III erzeugten Bewegung des Zahnriemens 76.

## Patentansprüche

1. Werkzeugmaschine mit einer Spindel (35a, 35b), einem Werkzeugwechsler (40a, 40b, 90) zum Überführen von Werkzeughaltern (37a, 37b, 39a, 39b) zwischen einer Magazinposition (38a, 38b) und einer Spindelposition (36a, 36b) an der Spindel (35a, 35b) sowie mit einer Hubvorrichtung (80) zum Überführen eines Werkzeughalters (37a, 37b) zwischen der Spindelposition (36a, 36b) und einer Arbeitsposition in einer Werkzeugaufnahme (34a, 34b) der Spindel (35a, 35b), wobei für den Werkzeugwechsler (40a, 40b, 90) und die Hubvorrichtung (80) eine gemeinsame Antriebsvorrichtung (50) vorgesehen ist,
dadurch gekennzeichnet, daß
die gemeinsame Antriebsvorrichtung (50) und der Werkzeugwechsler (40a, 40b, 90) an einer parallel zur Hubrichtung bewegbaren Konsole (60) angeordnet sind.

2. Werkzeugmaschine nach Anspruch 1, dadurch gekennzeichnet, daß die gemeinsame Antriebsvorrichtung (50) einen Motor (53) mit zwei Abtriebswellen (54, 55) aufweist, die mit einem Wechslerantrieb (70) bzw. einem Hubantrieb (80) der gemeinsamen Antriebsvorrichtung (50) antriebsmäßig gekoppelt sind.

3. Werkzeugmaschine nach Anspruch 2, dadurch gekennzeichnet, daß der Wechslerantrieb (70) und/oder der Hubantrieb (80) als Wechslergetriebe (70) bzw. als Hubgetriebe (80) ausgebildet sind.

4. Werkzeugmaschine nach Anspruch 3, dadurch gekennzeichnet, daß das Wechslergetriebe (70) und das Hubgetriebe (80) derart aufeinander abgestimmt sind, daß Wechslerbewegungen und Hubbewegungen unmittelbar aufeinander folgen.

5. Werkzeugmaschine nach einem der Ansprüche 1 bis 4, dadurch gekennzeichnet, daß der Hubantrieb (80) der gemeinsamen Antriebsvorrichtung (50) an einem Spindelstock (31) in Hubrichtung verschiebbar gelagert ist und sich für Hubbewegungen an dem Spindelstock (31) abstützt.

6. Werkzeugmaschine nach einem der Ansprüche 1 bis 5, dadurch gekennzeichnet, daß die Konsole (60) federentlastet an dem Spindelstock (31) abgestützt ist.

7. Werkzeugmaschine nach einem der Ansprüche 1 bis 6, dadurch gekennzeichnet, daß das Hubgetriebe (80) der gemeinsamen Antriebsvorrichtung (50) eine mit der zugeordneten Abtriebswelle (55) des Motors (53) drehfest verbundene Kurbel (81) mit einem Kurbelzapfen (82), eine Zahnschubstange (83) mit zwei Nuten (85, 86), in die der Kurbelzapfen (82) wahlweise eingreift, sowie eine mit der Zahnschubstange (83) kämmende Zahnradkurbel (87) mit einem Kurbelzapfen (88) aufweist, der sich ortsfest an dem Spindelstock (31, 89) abstützt.

8. Werkzeugmaschine nach einem der Ansprüche 1 bis 7, dadurch gekennzeichnet, daß das Wechslergetriebe (70) der gemeinsamen Antriebsvorrichtung (50) eine mit der zugeordneten Abtriebswelle (54) des Motors (53) drehfest verbundene Kurbel (71) mit einem Kurbelzapfen (72) aufweist, der in eine Nut (75) einer Schubstange (73) eingreift, die in einen Riemen- oder Kettenantrieb (76, 77a - 77f, 78) für den Werkzeugwechsler (40a, 40b) eingeschaltet ist.

9. Werkzeugmaschine nach Anspruch 8, dadurch gekennzeichnet, daß der Riemen- oder Kettenantrieb (76, 77a - 77f, 78) einen Zahnriemen (76) aufweist.

10. Werkzeugmaschine nach Anspruch 8 oder 9, dadurch gekennzeichnet, daß der Riemen- oder Kettenantrieb (76, 77a - 77f, 78) eine Justiervorrichtung (78) aufweist.

11. Werkzeugmaschine nach einem der Ansprüche 8 bis 10, dadurch gekennzeichnet, daß die Schubstange (73) mit Rastnuten (79) versehen ist, deren Positionen an der Schubstange (73) der Magazinposition (38a, 38b) bzw. der Spindelposition (36a, 36b) des Werkzeugwechslers (40a, 40b, 90) entsprechen.

12. Werkzeugmaschine nach einem der Ansprüche 8 bis 11, dadurch gekennzeichnet, daß die Nuten (75, 85, 86) der Schubstange (73) bzw. der Zahnschubstange (83) offene Nuten (75, 85, 86) mit einer dem Radius der jeweiligen Kurbeln (71, 81) entsprechenden Tiefe sind.

13. Werkzeugmaschine nach einem der Ansprüche 1 bis 10, dadurch gekennzeichnet, daß die Werkzeugmaschine (10) zwei Spindeln (35a, 35b) und zwei diesen Spindeln (35a, 35b) zugeordnete Werkzeugwechsler (40a, 40b, 90) aufweist, die von demselben Wechslerantrieb (70) angetrieben werden.

## Claims

1. A machine tool, having a spindle (35a, 35b), a tool changer (40a, 40b, 90) for conveying tool holders (37a, 37b, 39a, 39b) between a magazine position (38a, 38b) and a spindle position (36a, 36b) at the spindle (35a, 35b) and a stroke mechanism (80) for conveying a tool holder (37a, 37b) between the spindle position (36a, 36b) and a working position in a tool receptacle (34a, 34b) of the spindle (35a, 35b), whereby a common drive mechanism (50) is provided for the tool changer (40a, 40b, 90) and the stroke mechanism (80), characterized in that the common drive mechanism (50) and the tool changer (40a, 40b, 90) are arranged on a bracket (60) that is movable parallel to the stroke direction.

2. The machine tool of claim 1, characterized in that the common drive mechanism (50) comprises a motor (53) having two output shafts (54, 55) which are drive-coupled to a changer drive (70) and a stroke drive (80), respectively, of the common drive mechanism (50).

3. The machine tool of claim 2, characterized in that the changer drive (70) and/or the stroke drive (80) are configured as a changer drive train (70) and a stroke drive train (80), respectively.

4. The machine tool of claim 3, characterized in that the changer drive train (70) and the stroke drive train (80) are matched to one another in such a way that changer motions and stroke motions directly follow one another.

5. The machine tool of any of claims 1-4, characterized in that the stroke drive (80) of the common drive mechanism (50) is mounted displaceably in the stroke direction on a spindle head (31), and is braced against said spindle head (31) for stroke motions.

6. The machine tool of any of claims 1-4, characterized in that the bracket (60) is braced in spring-compensated fashion against the spindle head (31).

7. The machine tool of any of claims 1-6, characterized in that the stroke drive (80) of the common drive mechanism (50) comprises a crank (81) provided with a crank pin (82) and joined nonrotatably to the associated output shaft (55) of the motor (53), a toothed slider bar (83) having two slots (85, 86) into which the crank pin (82) alternatively engages, and a toothed crank (87) that mashes with the toothed slider bar (83) and comprises a crank pin (88) that is braced in stationary fashion to the spindle head (31, 89).

8. The machine tool of any of claims 1-7, characterized in that the changer drive train (70) of the common drive mechanism (50) comprises a crank (71) that is joined nonrotatably to the associated output shaft (54) of the motor (53) and has a crank pin (72) that engages into a slot (75) of a slider bar (73) which is incorporated into a belt or chain drive (76, 77a-77f, 78) for the tool changer (40a, 40b).

9. The machine tool of claim 8, characterized in that the belt or chain drive (76, 77a-77f, 78) comprises a toothed belt (76).

10. The machine tool of claim 8 or 9, characterized in that the belt or chain drive (76, 77a-77f, 78) comprises an adjustment mechanism (78).

11. The machine tool of any of claims 8-10, characterized in that the slider bar (73) is provided with snap slots (79) whose positions on the slider bar (73) correspond to the magazine position (38a, 38b) and the spindle position (36a, 36b), respectively, of the tool changer (40a, 40b, 90).

12. The machine tool of any of claims 8-11, characterized in that the slots (75, 85, 86) of the slider bar (73) and the toothed slider bar (83), respectively, are open slots (75, 85, 86) having a depth corresponding to the radius of the respective cranks (71, 81).

13. The machine tool of any of claims 1-10, characterized in that the machine tool (10) comprises two spindles (35a, 35b) and two tool changers (40a, 40b, 90) associated with these spindles (35a, 35b), both tool changers being driven by the same changer drive (70).

## Revendications

1. Machine-outil comportant une broche (35a, 35b), un changeur d'outil (40a, 40b, 90) pour le transfert de porte-outils (37a, 37b, 39a, 39b) entre une position de magasin (38a, 38b) et une position de broche (36a, 36b) sur la broche (35a, 35b), ainsi qu'un dispositif de levage (80) pour le transfert d'un porte-outil (37a, 37b) entre la position de broche (36a, 36b) et une position de travail dans un logement d'outil (34a, 34b) de la broche (35a, 35b), un dispositif d'entraînement (50) commun étant prévu pour le changeur d'outil (40a, 40b, 90) et le dispositif de levage (80),
caractérisée en ce que
le dispositif d'entraînement (50) commun et le changeur d'outil (40a, 40b, 90) sont disposés sur une console (60) déplaçable parallèlement à la direction de levage.

2. Machine-outil selon la revendication 1, caractérisée en ce que le dispositif d'entraînement (50) commun comporte un moteur (53) avec deux arbres menés (54, 55), qui sont couplés en entraînement, respectivement avec une commande de changeur (70) et une commande de levage (80) du dispositif d'entraînement (50) commun.

3. Machine-outil selon la revendication 2, caractérisée en ce que la commande de changeur (70) et/ou la commande de levage (80) sont réalisées respectivement sous la forme d'une transmission de changeur (70) et d'une transmissions de levage (80).

4. Machine-outil selon la revendication 3, caractérisée en ce que la transmission de changeur (70) et la transmission de levage (80) sont adaptées l'une à l'autre de manière que des mouvements de changeur et des mouvements de levage se succèdent directement.

5. Machine-outil selon l'une des revendications 1 à 4, caractérisée en ce que la commande de levage (80) du dispositif d'entraînement (50) commun est montée de manière à pouvoir coulisser dans le sens du levage sur un porte-broche (31), et prend appui contre le porte-broche (31) pour des mouvements de levage.

6. Machine-outil selon l'une des revendications 1 à 5, caractérisée en ce que la console (60) est soutenue sur le porte-broche (31), sans être soumise à l'action d'un ressort.

7. Machine-outil selon l'une des revendications 1 à 6, caractérisée en ce que la transmission de levage (80) du dispositif d'entraînement (50) commun comporte une manivelle (81) avec un tourillon de manivelle (82), qui est reliée solidairement en rotation à l'arbre mené (55) associé du moteur (53), une bielle crantée (83) avec deux rainures (85, 86) dans lesquelles s'engage au choix le tourillon de manivelle (82), ainsi qu'une manivelle à engrenages (87) engrenant avec la bielle crantée (83) et avec un tourillon de manivelle (88) qui prend appui de manière stationnaire sur le porte-broche (31, 89).

8. Machine-outil selon l'une des revendications 1 à 7, caractérise en ce que la transmission de changeur (70) du dispositif d'entraînement (50) commun comporte une manivelle (71), reliée solidairement en rotation à l'arbre mené (54) associé du moteur (53), avec un tourillon de manivelle (72) qui s'engage dans une rainure (75) d'une bielle (73), laquelle est insérée dans une commande à courroie ou à chaîne (76, 77a-77f, 78) pour le changeur d'outil (40a, 40b).

9. Machine-outil selon la revendication 8, caractérisée en ce que la commande à courroie ou à chaîne (76, 77a-77f, 78) comporte une courroie crantée (76).

10. Machine-outil selon la revendication 8 ou 9, caractérisée en ce que la commande à courroie ou à chaîne (76, 77a-77f, 78) comporte un dispositif d'ajustage (78).

11. Machine-outil selon l'une des revendications 8 à 10, caractérisée en ce que la bielle (71) est pourvue de rainures d'encliquetage (79) dont les positions sur la bielle (73) correspondent à la position de magasin (38a, 38b), respectivement à la position de broche (36a, 36b) du changeur d'outil (40a, 40b, 90).

12. Machine-outil selon l'une des revendications 8 à 11, caractérisée en ce que les rainures (75, 85, 86) de la bielle (73), respectivement de la bielle crantée (83), sont des rainures ouvertes (75, 85, 86) avec une profondeur qui correspond aux rayons des manivelles (71, 81) correspondantes.

13. Machine-outil selon l'une des revendications 1 à 10, caractérisée en ce que la machine-outil (10) comporte deux broches (35a, 35b) et deux changeurs d'outil (40a, 40b, 90) qui sont associés à ces broches (35a, 35b) et qui sont entraînés par la même commande de changeur (70).
